# EUROPÄISCHE PATENTSCHRIFT

(11) **EP 2 783 452 B1**
(45) Veröffentlichungstag und Bekanntmachung des Hinweises auf die Patenterteilung: **24.08.2016**
(21) Anmeldenummer: 12794857.8
(22) Anmeldetag: 29.10.2012
(51) Int. Cl.: H02K 1/20, H02K 9/197, H02K 11/00

(54) **ELEKTRISCHE MASCHINE**
ELECTRICAL MACHINE
MACHINE ÉLECTRIQUE

(30) Priorität: 21.11.2011 DE 102011118917
(43) Veröffentlichungstag der Anmeldung: 01.10.2014
(73) Patentinhaber: Baumüller Nürnberg GmbH, 90482 Nürnberg (DE)
(72) Erfinder: VEEH, Michael, 97271 Kleinrinderfeld (DE); GUTJAHR, Frank, 92268 Etzelwang (DE); MELZER, Gerhard, 97246 Eibelstadt (DE)
(74) Vertreter: FDST Patentanwälte
(86) Internationale Anmeldenummer: PCT/EP2012/004518
(87) Internationale Veröffentlichungsnummer: WO 2013/075783

(56) Entgegenhaltungen:
- EP-A1- 0 026 833
- US-A- 4 323 803
- US-A1- 2011 133 580

## Beschreibung

Die Erfindung betrifft eine elektrische Maschine gemäß dem Oberbegriff des Anspruchs 1. Eine derartige elektrische Maschine ist beispielsweise aus der US 2011/0133580 A1 bekannt. Bei der elektrischen Maschine kann es sich um einen Motor oder um einen Generator handeln.

Zur Kühlung eines hochdynamischen Elektromotors ist es aus der DE 44 11 055 C2 bekannt, einen Kühlkreislauf vorzusehen, in dem ein flüssiges Kühlmittel zirkuliert, das in zwei zumindest teilweise voneinander beabstandeten und einen Ständer etwa konzentrisch umschließenden Hülsen strömt. Eine innere der Hülsen liegt an der Ständeraußenseite vollflächig an. Eine Ständerwickelkopfkühlung ist mit dem Kühlkreislauf für das in den Hülsen strömende Kühlmittel verbunden.

Aus der DE 20 2005 021 025 U1 ist eine gekühlte elektrodynamische Maschine mit einem Stator und mit einem Spaltrohr bekannt, das an einer zylinderförmigen Statorinnenwand anliegt und im Stator vorgesehene Nuten abdichtet, wobei in den Nuten verlaufende Strömungskanäle gebildet sind.

Aus der DE 101 03 447 A1 ist eine Ständerkühlung einer elektrischen Maschine bekannt, wobei der Ständer aus einem Elektro-Blechpaket gebildet ist und einen oder mehrere flexibel verformbare, auf das Blechpaket einwirkende Kühlkanäle für ein strömendes Kühlmedium aufweist. Die Kühlkanäle sind durch biegsame Wellenschläuche aus Metall gebildet.

Aus der DE 100 05 128 A1 ist ein kühlbarer Ständer für eine elektrische Maschine mit rotierendem Innenläufer bekannt, wobei der kühlbare Ständer im Querschnitt rechteckförmig mit abgeschrägten Eckbereichen ausgeführt ist. In diesen Eckbereichen sind Kühlkanäle mit darin eingesetzten Kühlrohren für einen Kühlmittelstrom angeordnet, die den Ständer parallel zur Rotationsachse durchsetzen.

Der Erfindung liegt die Aufgabe zugrunde, eine elektrische Maschine mit einem kühlbaren Stator mit möglichst wirkungsvoller Kühlung anzugeben. Insbesondere soll zudem eine möglichst optimale Kühlraumbildung im Bereich statorseitiger Wickelköpfe erreicht werden.

Gelöst wird die Aufgabe durch eine elektrische Maschine mit den Merkmalen von Anspruch 1.

Hierzu umfasst der Stator ein lamelliertes, vorzugsweise ringförmiges Blechpaket aus Statorblechen. Zwischen radial nach innen gerichteten Statorzähnen sind Statornuten gebildet, die zur Aufnahme von Spulen oder Spulenwindungen einer auf die Statorzähne gewickelten Feldwicklung (Statorwicklung) vorgesehen sind. In jedes Statorblech ist eine Anzahl von Durchgangsöffnungen eingebracht, die im Statorblechpaket miteinander fluchten und Kühlkanäle bilden.

Die Durchgangsöffnungen bzw. Kühlkanäle werden direkt für ein Kühlmedium, insbesondere Öl, genutzt. Mittels der Durchgangsöffnungen bzw. Kühlkanäle innerhalb des Statorblechpaketes ist nicht nur eine vergleichsweise gute Statorkühlung erreicht. Vielmehr steht auch ein vergleichsweise großer Kühlraum im Bereich der statorseitiger Wickelköpfe zur Verfügung.

Die Durchgangsöffnungen sind im die Statorzähne umgebenden Statorjochbereich, insbesondere im Bereich zwischen zwei benachbarten Statomuten, angeordnet. Die Statorbleche innerhalb des Blechpakets und/oder das Statorblechpaket sind/ist insbesondere um insgesamt eine Zahnbreite verschränkt. Infolge der Verschränkung verlaufen die von den Durchgangsöffnungen gebildeten Kühlkanäle innerhalb des Statorblechpaketes bzw. innerhalb dessen Jochbereiches wendelförmig.

Die elektrische Maschine weist ein Maschinengehäuse zur Aufnahme des Stators und eines Rotors auf. Im Luftspalt zwischen dem Rotor und dem Stator ist vorteilhafterweise ein Spaltrohr zur Bildung eines statorseitigen Kühlmittelraums (Kühlraum) für ein Kühlmedium, insbesondere Öl, bzw. zur Abdichtung des Rotors gegen den Kühlmittelraum angeordnet. Stirnseitig aus dem Statorblechpaket herausragende Wickelköpfe der Feldwicklung sind vom Kühlmedium umströmt, welches das Statorblechpaket über deren Kühlkanäle durchströmt.

Erfindungsgemäß ist in zumindest einen Kühlkanal des Statorblechpakets stirnseitig eine Hohlschraube eingesetzt, die ein Potentialausgleichslabel befestigt und die Funktion des entsprechenden Kühlkanals aufrechterhält wobei der Kühlkanal zusätzlich die Funktion, der Aufnahme der Hohlschraube übernimmt.

Die mit der Erfindung erzielten Vorteile bestehen insbesondere darin, dass durch Einbringung der Kühlöffnungen in die einzelnen Statorbleche und deren miteinander fluchtende Ausrichtung innerhalb des Statorblechpaketes sowie dort vorzugsweise umfangsseitig des Statorjochbereiches sowohl eine effektive Kühlung erreicht als auch ein besonders kompakter Aufbau des bewickelten Stators ermöglicht ist.

Nachfolgend wird ein Ausführungsbeispiel der Erfindung anhand einer Zeichnung näher erläutert. Darin zeigen:
- Fig. 1: in einer perspektivischen Darstellung einen als Blechpaket ausgeführten Stator mit ringförmigem Querschnitt und mit radial nach innen ragenden Statorzähnen und dazwischen vorgesehenen Statomuten,
- Fig. 2: in Draufsicht ein Statorblech des Statorblechpakets gemäß Fig. 1,
- Fig. 3: den Stator gemäß Fig. 1 inklusive Wickelköpfen sowie mit Anschlusskabeln zum Potentialausgleich, und
- Fig. 4: im Querschnitt einen Elektromotor mit einem Stator gemäß Fig. 3.

Einander entsprechende Teile sind in allen Fig. mit den gleichen Bezugszeichen versehen.

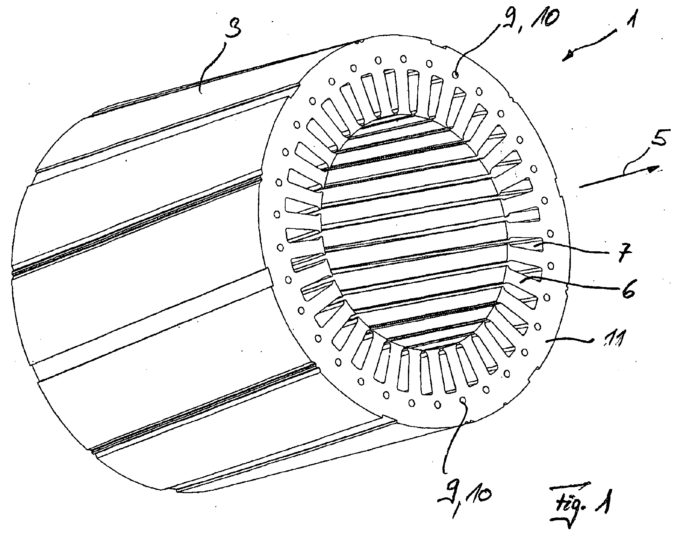

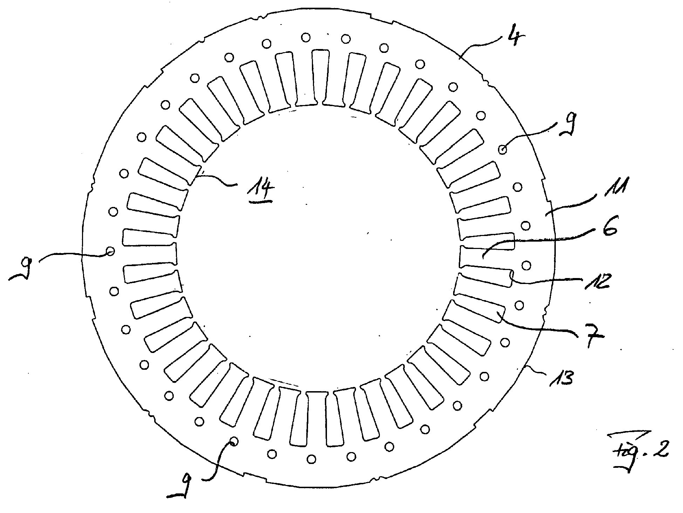

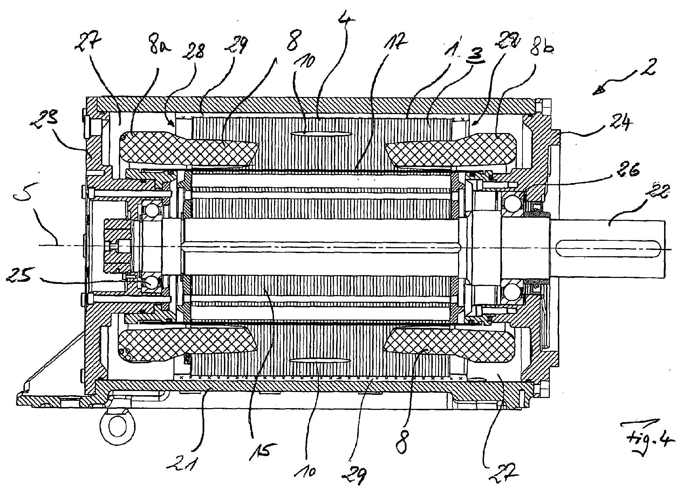

Fig. 1 zeigt den Stator 1 eines in Fig. 4 im Querschnitt dargestellten Elektromotors 2 als elektrische Maschine. Der Stator 1 ist als Blechpaket 3 aus einer Anzahl von ringförmigen Statorblechen 4 (Fig. 2) aufgebaut, die in Axialrichtung 5 gestapelt und miteinander verbunden, beispielsweise verschweißt oder auf andere Art und Weise miteinander gefügt sind. Die Statorbleche 4 sind hierbei vorzugsweise direkt, d. h. ohne Materialauftrag, Lackschicht oder dergleichen zusammengesetzt.

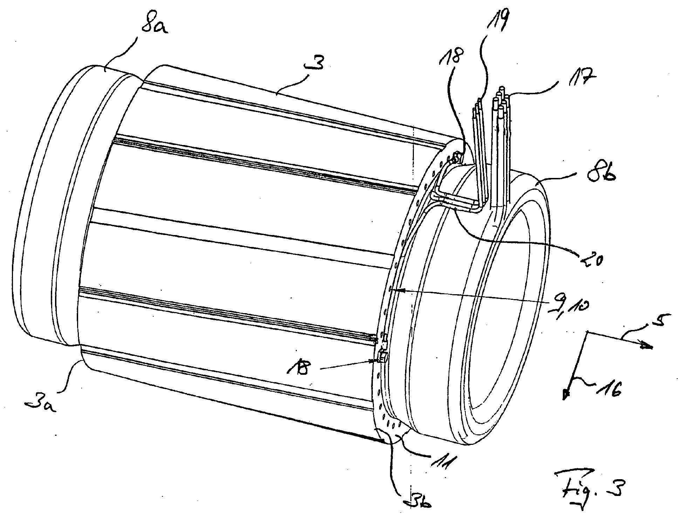

Gemäß Fig. 2 weisen die einzelnen Statorbleche 4 radial nach innen gerichtete Statorzähne 6 auf, zwischen denen Statornuten 7 gebildet sind. Auf die Statorzähne 6 sind Spulen einer Feld- oder Statorwicklung 8 (Fig. 3 und 4) gewickelt.

Die zwischen den Statorzähnen 6 gebildeten Statornuten 7 dienen zur Aufnahme der Spulenwicklungen.

In jedes der Statorbleche 4 ist eine Anzahl von Durchgangs- oder Kühlkanalöffnungen 9 eingebracht. Diese Öffnungen 9 fluchten innerhalb des Statorblechpaketes 3 miteinander und bilden dort Kühlkanäle 10 (Fig. 1). Die Öffnungen 9 und somit die Kühlkanäle 10 sind geeigneterweise im das die Statorzähne 6 umgebende und mit diesen einteilige Statorjoch (Statorjochbereich) 11 angeordnet.

Das Statorblechpaket 3 ist vorzugsweise zylinderförmig, so dass der Statorjochbereich 11 kreisringförmig ist. Die Durchgangsöffnungen 9 innerhalb der einzelnen Statorbleche 4 befinden sich bevorzugt zwischen benachbarten Statornuten 7 sowie bezogen auf die Statorzähne 6 radial zwischen deren Anbindungen 12 an den Statorjochbereich 11 und dessen Außenumfang oder Außenumfangskante 13. Radial innenseitig bilden die Zahnfreienden der Statorzähne 6 den so genannten Polschuh 14, der einen ringförmigen Luftspalt (Ringspalt) zwischen dem Stator 1 und einem Rotor 15 des in Fig. 4 dargestellten Elektromotors 2 statorseitig begrenzt.

Wie aus Fig. 1 ersichtlich ist, ist das Statorblechpaket 3 um zweckmäßigerweise insgesamt eine Zahnbreite eines Statorzahns 6 verschränkt. Hierzu sind die Statorbleche 4 innerhalb des Statorblechpakets 3 gegeneinander, vorzugsweise im Uhrzeigersinn, verdreht. Somit verlaufen sowohl die Statornuten 7 als auch die Statorzähne 6 und insbesondere die Kühlkanäle 10 innerhalb des Statorjochbereichs 11 quasi wendelförmig.

Fig. 3 zeigt das Statorblechpaket 3 gemäß Fig. 1 im mit der Feld- oder Statorwicklung 8 versehenen Montagezustand. An den Stirnseiten 3a und 3b sind im Zuge der Bewicklung der Statorzähne 6 Wickelköpfe 8a bzw. 8b gebildet, die das Statorblechpaket 3 in Axialrichtung 5 überragen. Anhand der Stirnseite 3b des Statorblechpakets 3 ist in Fig. 3 erkennbar, dass die Wickelköpfe 8a, 8b sich in Radialrichtung 16 derart erstrecken, dass der Statorjochbereich 11 zugänglich ist, insbesondere für ein Kühlmedium. Erkennbar sind am Wickelkopf 8b die Spulenoder Wicklungsenden 17 der typischerweise dreiphasigen Feld- bzw. Statorwicklung 9 herausgeführt.

Des Weiteren ist in Fig. 3 erkennbar, dass einige der Kühlkanäle 10 mündungsseitig dazu genutzt sind, vorzugsweise Hohlschrauben als Befestigungselemente 18 aufzunehmen, die Kabel oder Leitungen 19 für einen Potentialausgleich am Statorblechpaket 3 befestigen und dort kontaktieren. Das jeweilige Kabel 19 ist beispielsweise mit einem Schutzschlauch 20 versehen. Von den Kühlkanälen 10 sind somit drei Kühlkanäle 10 für den Potentialausgleich verwendet. Die vorzugsweise als Hohlschrauben ausgeführten Befestigungselemente 18 ermöglichen die Aufrechterhaltung der Funktion des Kühlkanals 10, der zusätzlich die Funktion der Aufnahme des Befestigungselements 18 für den Potentialausgleich übemimmt.

Der in Fig. 4 im Längsschnitt dargestellte Elektromotor 2 weist ein Motorgehäuse 21 auf, in dem der Stator 1 und der Rotor 15 angeordnet sind. Der Rotor 15 sitzt auf einer Motorwelle 22. Diese ist im Bereich von stirnseitig des Motorgehäuses 21 mit diesen verbundenen Lagerschilden 23, 24 vorzugsweise mittels Wälz- oder Kugellagern 25 bzw. 26 innerhalb des Motorgehäuses 21 gelagert und einseitig aus dem Motorgehäuse 21 herausgeführt.

Im zwischen dem Stator 1 und dem Rotor 15 verbleibenden Luftspalt ist ein zylinderförmiges, geschlossenes Spaltrohr 17 angeordnet. Das Spaltrohr 17 begrenzt einen statorseitigen Kühlraum 27 für ein Kühlmedium, insbesondere Öl. Die stirnseitig aus dem Statorblechpaket 3 herausragenden Wickelköpfe 8a, 8b der Feldwicklung 8 sind vom Kühlmedium umströmt, das zudem über die durch die Durchführungsöffnungen 9 der Statorbleche 4 gebildeten Kühlkanäle 10 strömt.

Erkennbar ist der Statorjochbereich 11 zugänglich und dient daher als Anlagefläche 28, an die sich eine Vorrichtung, beispielsweise in Form einer zylindrischen Gießform oder dergleichen anlagen kann. Diese Vorrichtung bzw. Gießform dient zum Einbringen oder Aufbringen eines Isoliermediums, beispielsweise Wachs oder dergleichen, auf die Wickelköpfe 8a, 8b. Weiteres Isoliermaterial 29 ist auch zwischen dem Stator 1 bzw. dessen Statorblechpaket 3 und der Innenwandung des Motorgehäuses 2 in dieses eingebracht.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Der Schutzbereich ist durch die Anspruche definiert.

### Bezugszeichenliste

- 1: Stator
- 2: Elektromotor/Maschine
- 3: Stator-/Blechpaket
- 4: Statorblech
- 5: Axialrichtung
- 6: Statorzahn
- 7: Statornut
- 8: Feld-/Statorwicklung
- 8a, 8b: Wickelkopf
- 9: Durchgangs-/Kühlkanalöffnung
- 10: Kühlkanal
- 11: Statorjoch/-Bereich
- 12: Anbindung
- 13: Ausumfangskante
- 14: Polschuh
- 15: Rotor
- 16: Radialrichtung
- 17: Spaltrohr
- 18: Befestigungselement
- 19: Potentialausgleichskabel
- 20: Isolierschlauch
- 21: Motorgehäuse
- 22: Motorwelle
- 23, 24: Lagerschild
- 25, 26: Lager
- 27: Kühlmittelraum
- 28: Anlagefläche
- 29: Isoliermaterial

## Patentansprüche

1. Elektrische Maschine (2) mit einem Rotor (15) und mit einem diesen koaxial umgebenden kühlbaren Stator (1) mit einem ringförmigen Statorblechpaket (3) mit radial nach innen gerichteten Statorzähnen (6), zwischen denen Statornuten (7) zur Aufnahme einer auf die Statorzähne (6) gewickelten Feldwicklung (8) gebildet sind, wobei das Statorblechpaket (3) aus einer Anzahl von Statorblechen (4) mit in diese im die Statorzähne (6) umgebenden Statorjochbereich (11) umfangsseitig eingebrachten Durchgangsöffnungen (9) gebildet ist, die im Statorblechpaket (3) miteinander fluchten und Kühlkanäle (10) bilden,
**dadurch gekennzeichnet,**
- **dass** aus dem Statorblechpaket (3) stirnseitig Wickelköpfe (8a, 8b) der Feldwicklung (8) herausragen, die vom Kühlmedium umströmt sind, das zudem über die durch die Durchführungsöffnungen (9) der Statorbleche (4) gebildeten Kühlkanäle (10) strömt, und
- **dass** in zumindest einen Kühlkanal (10) des Statorblechpaketes (3) stirnseitig eine Hohlschraube (18) eingesetzt ist, die ein Potentialausgleichskabel (9) befestigt und die Funktion des entsprechenden Kühlkanals (10) aufrechterhält, wobei der Kühlkanal (10) zusätzlich die Funktion der Aufnahme der Hohlschraube (18) übernimmt.

2. Elektrische Maschine (2) nach Anspruch 1,
**dadurch gekennzeichnet,**
**dass** die Durchgangsöffnungen (9) jeweils im Bereich zwischen zwei benachbarten Statornuten (7) vorgesehen sind.

3. Elektrische Maschine (2) nach Anspruch 1 oder 2,
**dadurch gekennzeichnet,**
**dass** das Statorblechpaket (3) verschränkt ist.

4. Elektrische Maschine (2) nach einem der Ansprüche 1 bis 3,
**dadurch gekennzeichnet,**
**dass** das Statorblechpaket (3) um insgesamt eine Zahnbreite eines der Statorzähne (6) verschränkt ist.

5. Elektrische Maschine (2) nach einem der Ansprüche 1 bis 4,
**gekennzeichnet durch**
ein im Luftspalt zwischen dem Rotor (15) und dem Stator (1) angeordnetes Spaltrohr (17) zur Bildung eines statorseitigen Kühlmittelraums (27) für ein Kühlmedium, insbesondere Öl.

6. Elektrische Maschine (2) nach Anspruch 5,
**dadurch gekennzeichnet,**
**dass** das Spaltrohr (17) dazu vorgesehen und eingerichtet ist, den Rotor (15) gegen den Kühlmittelraum (27) abzudichten.

## Claims

1. Electrical machine (2) having a rotor (15) and having a coolable stator (1) surrounding this coaxially having an annular stator laminated core (3) having stator teeth (6) directed radially inwards, between which stator grooves (7) to receive a field winding (8) wound on the stator teeth (6) are formed, wherein the stator laminated core (3) is formed from a number of stator laminations (4) having passage openings (9) introduced into this on the peripheral side in the stator yoke region (11) surrounding the stator teeth (6), said passage openings aligning with one another in the stator laminated core (3) and forming cooling channels (10),
**characterised in that**
- winding heads (8a, 8b) of the field winding (8) protrude from the stator laminated core (3) on the front side, said winding heads being flowed around by the coolant which additionally flows via the cooling channels (10) formed by the passage openings (9) of the stator lamination (4), and
- a banjo bolt (18) is inserted on the front side into at least one cooling channel (10) of the stator laminated core (3), said banjo bolt fastening a potential equalisation cable (9) and maintaining the function of the corresponding cooling channel (10), wherein the cooling channel (10) additionally assumes the function of receiving the banjo bolt (18).

2. Electrical machine (2) according to claim 1,
**characterised in that**
the passage openings (9) are each provided in the region between two adjacent stator grooves (7).

3. Electrical machine (2) according to claim 1 or 2,
**characterised in that**
the stator laminated core (3) is interlocked.

4. Electrical machine (2) according to one of claims 1 to 3,
**characterised in that**
the stator laminated core (3) is interlocked by, in total, one tooth width of one of the stator teeth (6).

5. Electrical machine (2) according to one of claims 1 to 4,
**characterised by**
a can (17) arranged between the rotor (15) and the stator (1) to form a stator-side coolant chamber (27) for a coolant, in particular oil.

6. Electrical machine (2) according to claim 5,
**characterised in that**
the can (17) is provided and established to seal the rotor (15) against the coolant chamber (27).

## Revendications

1. Machine électrique (2) comprenant un rotor (15) et, entourant celui-ci de manière coaxiale, un stator (1) pouvant être refroidi, qui comporte un empilement de tôles de stator (3) de forme annulaire avec des dents de stator (6) dirigées radialement vers l'intérieur et entre lesquelles sont formées des encoches de stator (7) destinées à accueillir un enroulement de champ ou enroulement de stator (8) enroulé sur les dents de stator (6), l'empilement de tôles de stator (3) étant formé d'un certain nombre de tôles de stator (4) comportant dans la zone de culasse ou de carcasse de stator (11) entourant les dents de stator (6), des ouvertures de passage (9) réalisées en périphérie et alignées mutuellement dans l'empilement de tôles de stator (3) en formant des canaux de refroidissement (10),
**caractérisée**
- **en ce que** de l'empilement de tôles de stator (3), font saillie frontalement, des têtes d'enroulement (8a, 8b) de l'enroulement de champ ou enroulement de stator (8) balayées par l'écoulement de fluide de refroidissement, qui s'écoule en outre à travers les canaux de refroidissement (10) formés par les ouvertures de passage (9) des tôles de stator (4), et
- **en ce que** dans au moins un canal de refroidissement (10) de l'empilement de tôles de stator (3), est insérée frontalement une vis creuse (18), qui fixe un câble d'équipotentialité (9) et conserve la fonction du canal de refroidissement (10) correspondant, le canal de refroidissement (10) assurant en supplément la fonction d'accueil de la vis creuse (18).

2. Machine électrique (2) selon la revendication 1,
**caractérisée**
**en ce que** les ouvertures de passage (9) sont prévues chacune respectivement dans la zone entre deux encoches de stator (7) voisines.

3. Machine électrique (2) selon la revendication 1 ou la revendication 2,
**caractérisée**
**en ce que** l'empilement de tôles de stator (3) est d'une configuration vrillée.

4. Machine électrique (2) selon l'une des revendications 1 à 3,
**caractérisée**
**en ce que** l'empilement de tôles de stator (3) est vrillé de manière globale d'une valeur correspondant à une largeur de dent de l'une des dents de stator (6).

5. Machine électrique (2) selon l'une des revendications 1 à 4,
**caractérisée**
**par** une gaine (17) agencée dans l'entrefer entre le rotor (15) et le stator (1), pour former du côté stator, une chambre de fluide de refroidissement (27) destinée à un fluide de refroidissement, notamment de l'huile.

6. Machine électrique (2) selon la revendication 5,
**caractérisée**
**en ce que** la gaine (17) est prévue et conçue pour assurer l'étanchéité du rotor (15) par rapport à la chambre de fluide de refroidissement (27).
